# EUROPEAN PATENT SPECIFICATION

(11) **EP 0 958 862 B1**
(45) Date of publication and mention of the grant of the patent: **20.08.2003**
(21) Application number: 99830304.4
(22) Date of filing: 17.05.1999
(51) Int. Cl.: B01L 3/00, G01N 33/49, G01N 21/83

(54) **Multiuse reactive-plate for analysis, particularly for direct analysis of whole blood or fluids containing any kind of particles or fragments**
Mehrzweck-Reaktionsplatte für Analyse, insbesondere für Analyse von Vollblut oder von Feststoffteilchen enthaltenden Fluiden
Plaque de réaction multi-usage pour analyse, en particulier pour analyse de sang complet ou de fluides contenant des particules

(30) Priority: 18.05.1998 IT RM980313
(43) Date of publication of application: 24.11.1999
(73) Proprietor: AMS s.r.l., 00012 Guidonia (RM) (IT)
(72) Inventor: Balducci, Diego, 00012 Guidonia (IT)
(74) Representative: Iannone, Carlo Luigi

(56) References cited:
- EP-A- 0 369 836
- EP-A- 0 490 447
- WO-A-95/30888
- US-A- 5 149 505
- US-A- 5 665 238

## Description

The present invention relates to a multiuse reactive-plate for analysis, particularly for direct analysis of whole blood or fluids containing any kind of particles or fragment.

More specifically, the invention relates to a multiuse reactive plate able to carry out measurements of single analytes.

In the following, the specification will be mainly based on the blood analysis, but it must be evident that the use of the reactive plate according to the invention is not so limited, since it can be applied in many other analysis fields, such as analysis of water, earth samples, etc.

As it is well known, presently, in order to obtain an explanation of the causes of a determined symptomatology a long time is required.

After the medical visit, to deepen the case, it is necessary to carry out analysis with a specific laboratory.

Also this operation requires a long time, since, after having fixed an appointment, it is necessary to draw the blood and the analysis results will be ready only after some days.

Only after having obtained the results, it is possible to go again to the doctor who only now could be able to make a diagnosis and to determine the therapy.

All the above operations have very high costs both for the patient, who is also obliged to loose time, not always easily available, and for the State that has to pay high costs for complicated operations.

Therefore, there is the needing of simplifying the above mentioned procedures, allowing the execution of the analysis practically in real time, i.e. during the visit, at least for all those cases when this is possible or necessary.

Thus, it is possible to carry out analysis and obtain the results in any medical studio, or first aid, in the ambulance, or even at the ill person bed.

In this direction is going the most recent search: on one side very sophisticated new analyses techniques are prepared, mainly concerning nucleic acid, DNA and RNA, analysis that, due to their complexity, and in some cases, dangerousness, can be only carried out in highly specialised laboratories; instead, on the other side, other simpler analysis are always more often carried out by self - test which can be bought in pharmacy, such as those to check the presence of sugar in urine and blood, which many diabetics make by themselves, or the pregnancy tests or those to individuate fertile days, which are now made by many women.

They are single manual tests giving a response at most within 10 minutes and that are used also in private and hospital analysis laboratories. Response obtained mainly is of the qualitative kind, positive or negative, even if other tests have been prepared that, by the use of rather simple apparatuses, allow also the execution of quantitative tests.

For example, diabetic tests exist drawing a drop of blood from the finger and determining the glycemic rate, by using an apparatus named "Glucometer®".

In view of these developments, it is always more realistic the perspective of being able to associate the medical examination and the execution of the analysis and to make that the patient, going only to one medical studio or general surgery, can, in many cases within half - one hour, go away having the result of a group of analysis concerning his/her syndrome, and thus immediately receiving the therapeutical prescription.

The problem that up to date existed was the impossibility of carrying out the most important analysis, i.e. blood analysis, is due to the fact that they are carried out on the serum.

As it is well known, in order to obtain serum it is necessary to draw the blood and to wait that blood coagulates, and then centrifugate the blood and separate the liquid component (serum), obtained separating cells.

Therefore, the solution of this problem preventing the immediate execution of blood analysis addresses search according two directions. First of all, "one step" tests, i.e. tests based on single reactives, that, once mixed with analyte, allow to read the result within few minutes. The other kind of evaluation to be carried out concerns the possibility of realising devices able to immediately separate the blood liquid component, sending the same within the area where meets the reactive, and realised in such a way that the result can be photometrically read and printed, within few minutes.

For example, quantitative evaluation of protein in biological fluids is often carried out by the use of specific antiserum. Antibody present within serum, either free or bound to the microlatex surface, bonds with the protein and creates immuno complex, i.e. antigen - antibody aggregates determining a very fast clouding of the means. Turbidimeter apparatuses measure absorbancy, i.e. the amount of light of an incident ray blocked, and therefore the amount of light remaining following the above mentioned clouding effect. By employing fixed amounts of antibodies it is possible to determine the variable amount of the analyte present in the biological fluid to be analysed.

In the past, these determination were executed manually within common cuvettes, wherein the proper amount of analyte and reagent were introduced, and the absorbance were read employing a simple photometer.

Today, this kind of determinations are carried mainly out by automatic analysers performing all the operations, comparing the sample result with that obtained in parallel by one or more calibrating serums and prints the final result.

They are all apparatuses employing serum or plasma, or, in any case, organic fluids from cells have been separated, mainly by centrifugation. None of the known apparatuses is able to make turbimetric determinations of proteins starting from whole blood, avoiding the centrifugation, in order to separate cells.

US5665238 describes a plate for analysis of whole blood with a lower element comprising a lower suction hole, an upper element comprising an aspiration port, a chamber defined between the lower and upper elements containing a filter element and a matrix on which different reagents are provided.

Analysing devices with wells rotating between rest and activation positions are known from EP490447 and EP369836. Analysing devices with channels or wicks allowing for the communication between a central hole and circumferential wells are known from US5149505 or WO9530888.

Main object of the present invention is that of providing a solution allowing to immediately carry out any kind of analysis.

It is therefore specific object of the present invention a multiuse reactive-plate for analysis, particularly for direct analysis of whole blood or fluids containing any kind of particles or fragment, comprising a first element or lower sector, a second element or intermediate sector and a third element or upper sector, all the above elements being made up of transparent material, said first element providing a lower suction central hole, coupling means provided with drawing system, a chamber communicating with said central hole, an unidirectional valve for the passage of the sucked fluid toward said second and third elements; said second element providing a plurality of channels communicating between said first element and the lower half of a plurality of reaction wells, within which the diluent is provided; said third element providing a number of half wells corresponding to the number provided in said second element, within which the reactive is provided, channels communicating between said half of reaction wells and a central hole, in correspondence of said central hole coupling means provided with sucking system being provided; said first element being fixedly coupled with said second element; said second element and said third element being coupled having their faced surfaces adhering, but in such a way to be able to rotate each other between a rest position, wherein the respective halves of reaction wells do not correspond and an activation position, wherein the relevant halves of the reaction wells correspond.

In a preferred embodiment of the reactive - plate according to the invention, upward said unidirectional valve, a cells or particles blocking filter is provided.

Preferably, according to the invention, said reactive is lyophilised.

Always according to the invention, said first, second and third elements have a substantially circular shape.

Furthermore, according to the invention, said reactive plate provides, before its use, drawing and sucking holes which are sealingly closed.

Always according to the invention, said first, second and third elements are assembled only before the use.

Preferably, according to the invention, 4, 6, 8 or more wells are provided, at least one of them being used as blank.

Furthermore, according to the invention, said drawing system provided three releases, particularly to suck 100 µl of blood or 50 µl of serum, 900 or 950 µl of diluent, and the third one to filter and send the sample in the different wells.

Still according to the invention, said first, second and third elements are made up of methacrylate or other plastic material.

The present invention will be now described, for illustrative but not limitative purposes, according to its preferred embodiments, with particular reference to the figures of the enclosed drawings, wherein:
figure 1 is a section view of a reactive - plate according to the invention;
figure 2 is a plan view of the reactive - plate according to the invention;
figure 3 is a section view of the lower element of the reactive - plate according to the invention;
figure 4 is a section view of the intermediate element of the reactive - plate according to the invention;
figure 5 is a section view of the upper element of the reactive - plate according to the invention;
figure 6 is a plan view of section of the well not used;
figure 7 is a plan view of section of the well during its activation;
figure 8 shows an example of use of the reactive - plate according to the invention during the drawing step; and
figure 9 shows an example of use of the reactive - plate according to the invention during the reading step.

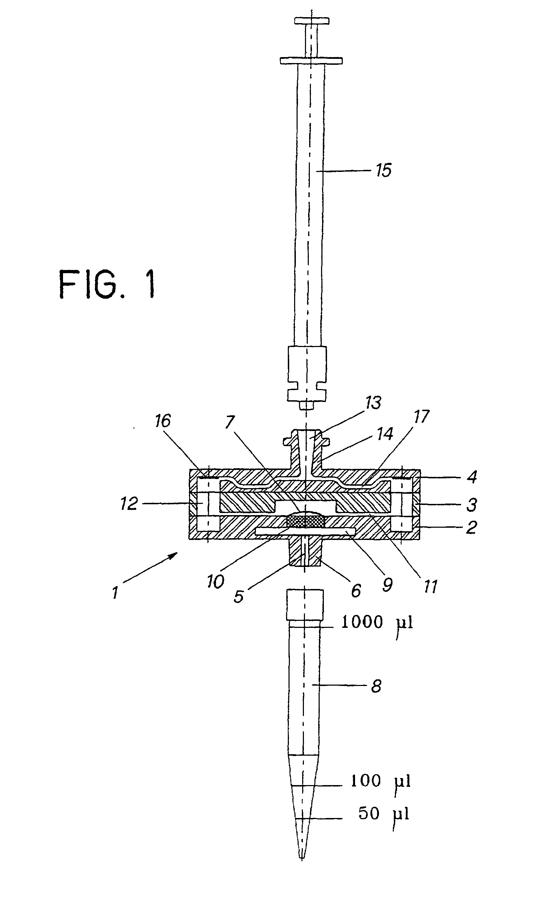

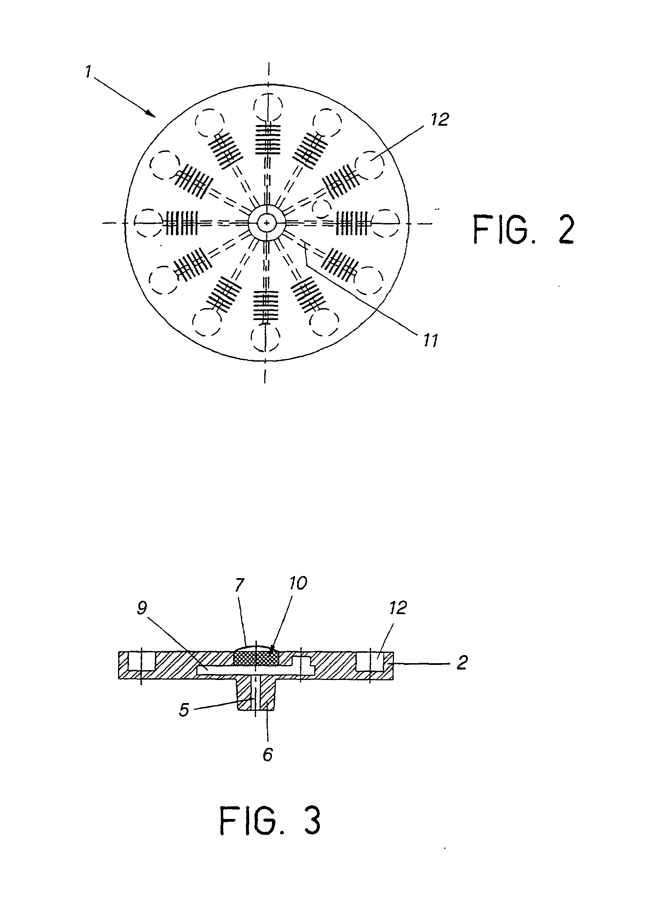

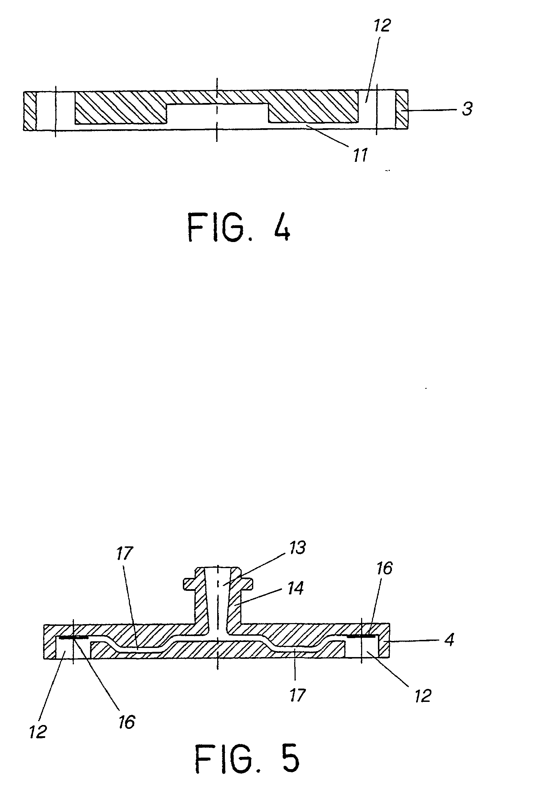

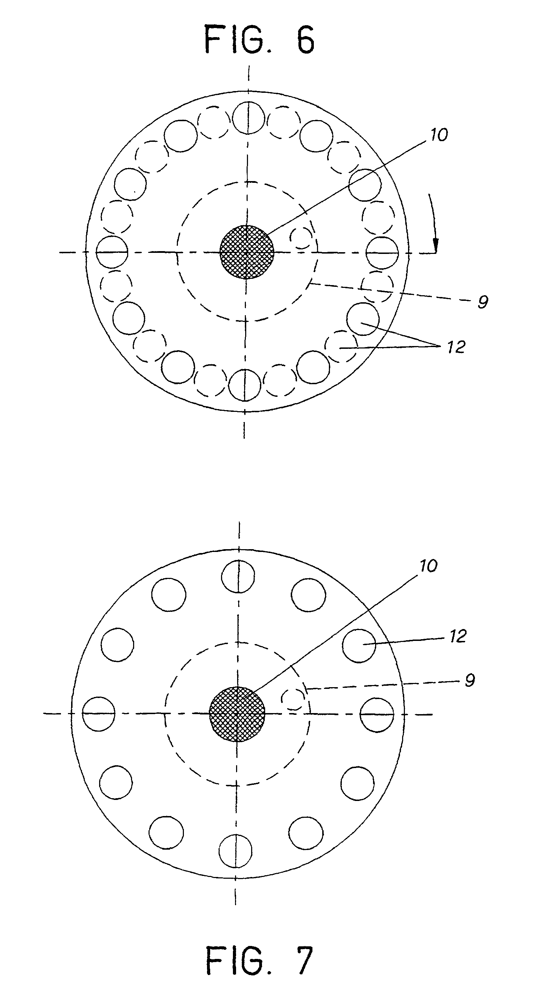

Coming now to observe figures of the enclosed drawings, and particularly figures 1 - 7, the invention suggests a multiuse reactive - plate 1, interchangeable and containing the specific reactives for the analysis to be carried out.

Said reactive - plate 1 has a circular shape and is made up of methacrylate or another rigid plastic, but always perfectly transparent.

In the solution shown in the figure for illustrative purposes, the reactive - plate 1 has a diameter of about 60 mm and a thickness of about 18 mm.

As it can be particularly observed in figures 1, 3 - 5, reactive - plate according to the invention is comprised of three elements or circular sectors 2, 3, 4 overlapped and fixed each other, each of them, in the embodiment shown thick 6 mm, which are activated, as will be described in greater detail in the following, operating, after having lifted the sample by suction.

Lower sector or circular element 2 is made up of a circular plate, having a diameter of 60 mm and a thickness of 6 mm, and provides a central inlet hole 5, which is completed downward by a prolongation 6 and is provided with a valve 7, in such a way to be possible to insert a calibrated point 8 having three circular marks, the first one to be able to suck a volume of 50 µl of calibration serum, the second one to be able to dose a sample of 100 µl of whole blood, and the third one to be able to reach a total volume of 1000 µl by the suction of anticoagulation substance dilutes in a buffer.

In case it is wished to titrate, instead of a whole blood sample, a serum sample or any other biological liquid, it would be sufficient to suck until the first mark, corresponding to 50 µl, as in case of measurement of calibration serums.

Diluted sample is sucked upward within a central chamber 9 allowing not only mixing of the sample but also, in case of whole blood, direct reading of hematocrit.

Central chamber 9, at a height of 8/10, provides a cell or particle blocking filter.

Coupling of lower element 2 with the intermediate one 3 creates a series of channels 11 through which the diluted sample, always by sucking, reaches wells 12 previously activated as will be described in the following, mixing reactive and diluent.

Intermediate sector or circular element 3 is made up in such a way to have on the upper surface, circumferentially placed, the lower half of the wells 12, having a diameter of about 3 mm and a total height, considering the lower and the upper halves, of 11 mm.

Within these wells 12, about 10 µl of reactive diluent are introduced.

Intermediate sector or element 3 is coupled with the upper element or sector 4 in such a way that, when inoperative, the lower half of the wells does not correspond to the upper half of the same wells 12.

In the embodiment of the reactive - plate according to the invention, it is provided an inner bayonet system blocking the upper sector 4 on the intermediate sector 3 in the proper inactive position, and in such a way that, after its extraction from the protective housing, it can only rotate about the axis.

Upper circular element or sector 4 provides a central hole 13 and a bayonet coupling 14 for fixing the same to a syringe 15 or other sucking device.

The upper half of the reaction wells 12 is circumferentially provided on the upper element 4, within said wells 12 being lyophilised the reactive 16.

Furthermore, centripetal channels 17 are provided in the element 4.

Sector 4 is coupled with the intermediate sector 3 by a coupling making it adhering to the sector, but allowing their respective sliding.

As already said, at the beginning, the lower half of the wells 12, provided on sector 3, and containing the reactive diluent, does not correspond with the upper half of the wells, until the activation occurs during the use.

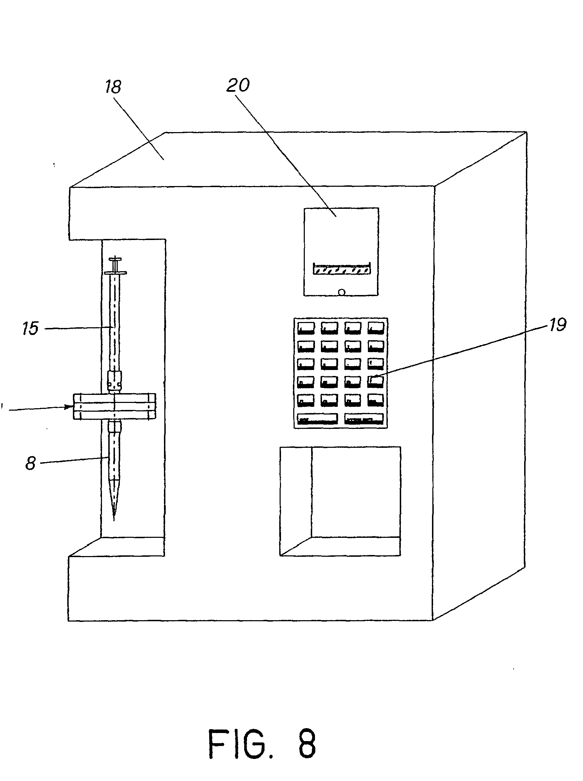

Reactive - plate 1, comprised of the three sectors 2, 3 and 4, once sucked the sample and the diluent, eliminated the calibrated point 8 and released from syringe 15, is for example introduced within the suitable seat of the photocolorimeter turbidimeter 18 for its reading (figure 8).

Reactive - plate 1 can be assembled when used, without the needing to proceed to the assembly until the different reactive - plate kinds are produced.

Upper sectors 4 must be beforehand prepared putting them within lyophilization trays with the half of the cylindrical wells 12 having their concavity directed upward, to distribute, according to a proper order, antiserum, suitably diluted and with a volume of about 10 µl, each one within a well 12, leaving an empty well that will act as control "blank".

The upper sectors must be then subjected to lyophilization and conserved in a nitrogen atmosphere or under vacuum until their assembling with the lower and intermediate sectors.

Intermediate sectors 3, once moulded, just before the assembly with the upper sectors 4, must be prepared introducing within the lower half of the wells 12 the reactive diluent that, in case of turbidimetric reactions, can be polyethylen glycol.

The above amounts have been provided only for indicative purposes, but it is well evident that said volume can be modified in the different kind of reactive - plate, according to the specific needing.

Finally, the lower sectors, after their moulding, must be prepared steadily fixing the cell blocking or particle filter 10 and the unidirectional valve 7 in the proper position.

This allows when using the same that the diluted blood or other biological fluid sample is filtrated and can lift by suction along the wells 12 and the corpuscle component cannot descend downward.

Structure of reactive - plate must be completed assembling three sectors 2, 3 and 4 one above the other, starting from the bottom.

Lower sector 2 must be steadily fixed below the intermediate sector 3 in the right position in order to allow the ascent of the sample toward the cylindrical wells 12 containing the reactives.

Upper sector 4 is then placed on the intermediate sector 3, in the "rest" position, i.e. with the upper half of the wells 12 not corresponding with the lower half of the cylindrical wells 12, so that the reactive - plates 1 can be moved, displaced and transferred without a contact between the dilution liquid and the lyophilised antiserums 16 of the dust reactives on the upper part of the cylindrical wells 12.

Finally, a bar code can be provided making it readable by the apparatus, putting each part of the reactive - plate 1 within a transparent blister, eventually with a different colour, protecting the part and making immediate its individuation by the user.

At rest, lower inlet hole 5 and upper inlet hole 13, the one that will be coupled with the syringe, will be hermetically closed.

To activate the reactive - plate 1 according to the invention, after having extracted the same form the protective package, a rotation must be made to bring the upper halves of the wells 12 provided on the upper sector 4 in correspondence with those of the intermediate sector 3, and thus the assembly is upturned two or three times.

In this way, the dissolution of the reactive is obtained, in such a way to activate the same to interact with the analyte contained in the sample.

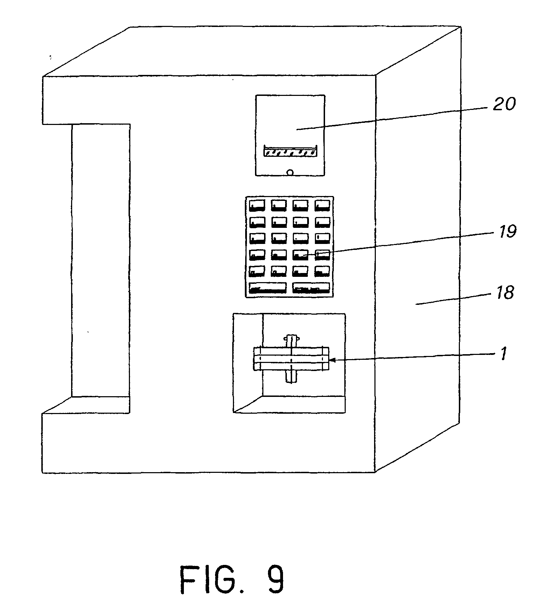

In figures 8 and 9 a portable turbidimeter - photocolorimeter 18 is shown for illustrative purposes, substantially very similar to other available on the market, and having the size of a shoe box.

Said apparatus comprises a perfectly sealed syringe 15, or another suction system, allowing the execution of three releases, the first one to draw form the finger or from a container 100 µl of blood or 50 µl of serum, the second one to suck 900 or 950 µl of diluent and the third one to filtrate and send the diluted sample in different reaction wells 12.

Syringe 15 can be replaced by any other suction system, provided that it can be engaged in the reactive - plate 1 and works as previously described.

It is further provided a rotating system allowing to carry out the programmed reading of the reactive - plate 1, on the circular periphery of which the reaction wells 12 are provided.

The apparatus further provides a double photometric system with a reading from the above or from the bottom, one for the hematocrit, thus reading closer to the axis of the reactive - plate 1, and the other one for the reading of the blank well 12 and then of the wells 12 containing the reactions, and that by a series of programmable and following releases mainly reads toward the periphery of the reactive - plate 1.

Turbidimeter 18 is further provided with a little electronic computer programmable by a keyboard 19 on the basis of the reactive - plate 1 and able to elaborate the final data on the basis the hematocrit. By the keyboard, at least the following data can be introduced:
- nameplate of the chosen reactive - plate 1;
- reading time;
- wavelength;
- test execution temperature;
- if whole blood or other biological liquid is treated;
- blank position;
- position of the possible calibration serums.

It is further provided a little built in printer 20 to immediately have the result of the analysis.

The reactive - plate 1 according to the invention can be provided with a number of wells 12 according to the needing. Eventually alternated wells 12 can be provided, one containing the reactive and the following one used as blank, giving the value to be subtracted, to allow the contemporaneous execution of a battery or reactions for example to clarify an arteriosclerotic syndrome, a circulatory insufficiency, an hepatic insufficiency, etc.

Obviously, reactive - plate 1 for veterinary analysis, food industry, diagnostic of plant diseases, ground and environment diagnosis can be provided.

The present invention has been described for illustrative but not limitative purposes, according to its preferred embodiments, but it is to be understood that modifications andlor changes can be introduced by those skilled in the art without departing from the relevant scope as defined in the enclosed claims.

## Claims

1. Multiuse reactive-plate for analysis, particularly for direct analysis of whole blood or fluids containing any kind of particles or fragment, **characterised in that** it comprises a first element or lower sector (2), a second element or intermediate sector (3) and a third element or upper sector (4), all the above elements being made up of transparent material, said first element (2) providing a lower suction central hole (5), a chamber (9) communicating with said central hole (5), an unidirectional valve (7) for the passage of the sucked fluid toward said second and third elements; said second element (3) providing a plurality of channels (11) communicating between said valve (7) and the lower half of a plurality of reaction wells (12), within which a diluent is provided; said third element (4) providing a number of half wells (12) corresponding to the number provided in said second element (3), within which a reactive is provided, channels (17) communicating between said half of reaction wells (12) and a central hole (13); said first element (2) being fixedly coupled with said second element (3); said second element (3) and said third element (4) being coupled having their faced surfaces adhering, but in such a way to be able to rotate each other between a rest position, wherein the respective halves of reaction wells (12) do not correspond and an activation position, wherein the relevant halves of the reaction wells (12) correspond.

2. Multiuse reactive-plate for analysis according to claim 1, **characterised in that** said first element comprises coupling means provided with drawing system (8).

3. Multiuse reactive-plate for analysis according to claim 1 or 2, **characterised in that** in correspondence of said central hole of the third element coupling means (14) provided with sucking system (15) are provided.

4. Multiuse reactive-plate for analysis according to one of the preceding claims, **characterised in that** upward said unidirectional valve (7), a cells or particles blocking filter is provided.

5. Multiuse reactive-plate for analysis according to one of the preceding claims, **characterised in that** said reactive is lyophilised.

6. Multiuse reactive-plate for analysis according to one of the preceding claims, **characterised in that** said first, second and third elements have a substantially circular shape.

7. Multiuse reactive-plate for analysis according to one of the preceding claims, **characterised in that** said reactive plate provides, before its use, drawing (5) and sucking (13) holes which are sealingly closed.

8. Multiuse reactive-plate for analysis according to one of the preceding claims, **characterised in that** said first, second and third elements are assembled only before the use.

9. Multiuse reactive-plate for analysis according to one of the preceding claims, **characterised in that** 4, 6, 8 or more wells are provided, at least one of them being used as blank.

10. Multiuse reactive-plate for analysis according to one of claims 2-9, **characterised in that** said drawing system provides three releases, particularly to suck 100 microlitres of blood or 50 microlitres of serum, 900 or 950 microlitres of diluent, and the third one to filter and send the sample in the different wells.

11. Multiuse reactive-plate for analysis according to one of the preceding claims, **characterised in that** said first, second and third elements are made up of methacrylate or other plastic material.

## Patentansprüche

1. Mehrfach-Reaktionsplatte für Analysen, insbesondere zur direkten Analyse des gesamten Blutes oder Flüssigkeiten, welche irgendeine Art von Partikeln oder Fragmenten enthalten, **gekennzeichnet durch** ein erstes Element oder Unterteil (2), ein zweites Element oder Mittelteil (3) und ein drittes Element oder Oberteil (4), welche sämtlich aus transparentem Material bestehen, wobei das erste Element (2) eine untere zen-
trale Absaugöffnung (5), eine mit dieser kommunizierende Kammer (9) und ein Ein-Richtungs-Ventil (7) für den Durchtritt der abgesaugten Flüssigkeit zum zweiten und dritten Element aufweist, das zweite Element (3) eine Mehrzahl von Kanälen (11) bildet, die zwischen dem Ventil (7) und der unteren Hälfte einer Mehrzahl von Reaktionsmulden (12) verlaufen, in welchen sich ein Lösungsmittel befindet, das dritte Element (4) eine Anzahl von der Anzahl im zweiten Element (3) entsprechende Anzahl von Halbmulden (12), in denen sich ein Reaktionsmittel befindet, sowie zwischen der Hälfte der Reaktionsmulden (12) und der zentralen Öffnung (13) verlaufende Kanäle (17) aufweist, wobei ferner das erste Element (2) fest mit dem zweiten Element (3) verbunden ist und das zweite Element (3) so mit dem dritten Element (4) verbunden ist, dass ihre einander zugekehrten Oberflächen zusammenliegen, jedoch derart, dass sie gegeneinander verdrehbar sind zwischen einer Ruheposition, in welcher die jeweiligen Hälften der Reaktionsmulden (12) nicht miteinander übereinstimmen, und einer aktiven Position, in welcher die betreffenden Hälften der Reaktionsmulden (12) miteinander übereinstimmen.

2. Mehrzweck-Reaktionsplatte zu Analysezwecken nach Anspruch 1, **dadurch gekennzeichnet, dass** das erste Element eine mit einem Ansaugsystem (8) versehene Kupplung aufweist.

3. Mehrzweck-Reaktionsplatte zu Analysezwecken nach Anspruch 1 oder 2, **dadurch gekennzeichnet, dass** eine der zentralen Bohrung des dritten Elements entsprechende Kupplung (14) mit einem Saugsystem (15) vorgesehen ist.

4. Mehrzweck-Reaktionsplatte zu Analysezwecken nach einem der vorstehenden Ansprüche, **dadurch gekennzeichnet, dass** oberhalb des Ein-Richtungs-Ventils (7) ein die Zellen oder Partikel zurückhaltendes Filter vorgesehen ist.

5. Mehrzweck-Reaktionsplatte zu Analysezwecken nach einem der vorstehenden Ansprüche, **dadurch gekennzeichnet, dass** die Reaktanzsubstant gefriergetrocknet ist.

6. Mehrzweck-Reaktionsplatte zu Analysezwecken nach einem der vorstehenden Ansprüche, **dadurch gekennzeichnet, dass** das erste, zweite und dritte Element im wesentlichen kreisförmig sind.

7. Mehrzweck-Reaktionsplatte zu Analysezwecken nach einem der vorstehenden Ansprüche, **dadurch gekennzeichnet, dass** die Reaktanzplatte vor ihrer Benutzung dicht verschlossene Ansaug- und Absaugöffnungen (5 bzw. 13) aufweist.

8. Mehrzweck-Reaktionsplatte zu Analysezwecken nach einem der vorstehenden Ansprüche, **dadurch gekennzeichnet, dass** das erste, zweite und dritte Element erst vor Benutzung zusammengesetzt werden.

9. Mehrzweck-Reaktionsplatte zu Analysezwecken nach einem der vorstehenden Ansprüche, **dadurch gekennzeichnet, dass** vier, sechs, acht oder mehr Mulden vorgesehen sind, von denen mindestens eine als Leerprobe (blank) benutzt wird.

10. Mehrzweck-Reaktionsplatte zu Analysezwecken nach einem der Ansprüche 2 bis 9, **dadurch gekennzeichnet, dass** das Ansaugsystem drei Einteilungen, speziell zum Ansaugen von 100 µl Blut oder 50µl Serum, 900 oder 950 µl Lösungsmittel aufweist, von denen die dritte die Probe filtert und zu verschiedenen Mulden gelangen lässt.

11. Mehrzweck-Reaktionsplatte zu Analysezwecken nach einem der vorstehenden Ansprüche, **dadurch gekennzeichnet, dass** das erste, zweite und dritte Element aus Methacrylat oder anderem Plastikmaterial bestehen.

## Revendications

1. Plaque réactive à usages multiples pour l'analyse, en particulier pour l'analyse directe de sang complet ou de fluides contenant tout type de particules ou de fragments, **caractérisée en ce qu'**elle comprend un premier élément ou secteur inférieur (2), un second élément ou secteur intermédiaire (3) ou un troisième élément ou secteur supérieur (4), tous les éléments ci-dessus étant fabriqués en un matériau transparent, ledit premier élément (2) fournissant un orifice inférieur central d'aspiration (5), une chambre (9) communiquant avec ledit orifice central (5), une valve unidirectionnelle (7) pour le passage du fluide aspiré vers les second et troisième éléments ; ledit second élément (3) fournissant une pluralité de canaux (11) communiquant entre ladite valve (7) et la moitié inférieure d'une pluralité de puits réactionnels (12) dans lesquels un diluant est fourni ; ledit troisième élément (4) fournissant plusieurs demi puits (12) correspondant au nombre fourni dans ledit second élément (3), dans lesquels un réactif est fourni, des canaux (17) communiquant entre lesdites moitiés de puits réactionnels (12) et un orifice central (13); ledit premier élément (2) étant couplé de manière fixe avec ledit second élément (3) ; ledit second élément (3) et ledit troisième élément (4) étant couplés par leurs surfaces qui adhèrent mais de manière à pouvoir tourner l'un l'autre entre une position de repos dans laquelle les moitiés respectives des puits réactionnels (12) ne correspondent pas et une position d'activation dans laquelle les moitiés correspondantes des puits réactionnels (12) correspondent.

2. Plaque réactive à usages multiples pour l'analyse selon la revendication 1 **caractérisée en ce que** ledit premier élément comprend un moyen de couplage doté d'un système de prélèvement (8).

3. Plaque réactive à usages multiples pour l'analyse selon la revendication 1 ou la revendication 2 **caractérisée en ce que**, en correspondance avec ledit orifice central du troisième élément, sont fournis des moyens de couplage (14) dotés de systèmes d'aspiration (15).

4. Plaque réactive à usages multiples pour l'analyse selon l'une des revendications précédentes **caractérisée en ce que**, en amont de ladite valve unidirectionnelle (7), est fourni un filtre bloquant les cellules ou les particules.

5. Plaque réactive à usages multiples pour l'analyse selon l'une des revendications ci-dessus **caractérisée en ce que** ledit réactif est lyophilisé.

6. Plaque réactive à usages multiples pour l'analyse selon l'une des revendications précédentes **caractérisée en ce que** lesdits premier, second et troisième éléments ont une forme sensiblement circulaire.

7. Plaque réactive à usages multiples pour l'analyse selon l'une des revendications précédentes **caractérisée en ce que** ladite plaque réactive fournit, avant son utilisation, des orifices de prélèvement (5) et d'aspiration (13) fermés de manière étanche.

8. Plaque réactive à usages multiples pour l'analyse selon l'une des revendications précédentes **caractérisée en ce que** lesdits premier, second et troisième éléments sont assemblés seulement avant utilisation.

9. Plaque réactive à usages multiples pour l'analyse selon l'une des revendications précédentes **caractérisée en ce que** 4, 6, 8 puits ou plus sont fournis, au moins l'un d'eux étant utilisé comme blanc.

10. Plaque réactive à usages multiples pour l'analyse selon l'une des revendications 2 à 9 **caractérisée en ce que** ledit système de prélèvement fournit trois possibilités, en particulier pour aspirer 100 µl de sang ou 50 µl de sérum, 900 µl ou 950 µl de diluant et la troisième pour filtrer et envoyer l'échantillon dans les différents puits.

11. Plaque réactive à usages multiples pour l'analyse selon l'une des revendications précédentes **caractérisée en ce que** lesdits premier, second et troisième éléments sont fabriqués en méthacrylate ou un autre plastique.
